# EUROPÄISCHE PATENTSCHRIFT

(11) **EP 1 302 342 B1**
(45) Veröffentlichungstag und Bekanntmachung des Hinweises auf die Patenterteilung: **10.05.2006**
(21) Anmeldenummer: 02022004.2
(22) Anmeldetag: 01.10.2002
(51) Int. Cl.: B60G 9/02

(54) **Federungssystem für eine pendelnd gelagerte Achse**
Suspension system for a pendular axle
Système de suspension d'un essieu oscillant

(30) Priorität: 12.10.2001 US 976913
(43) Veröffentlichungstag der Anmeldung: 16.04.2003
(73) Patentinhaber: DEERE & COMPANY, Moline, Illinois 61265-8098 (US)
(72) Erfinder: Leyonhjelm, Jeffrey Michael, Penshurst, Victoria 3289 (AU); Allen, Lyal Douglas, Hamilton, Victoria 3300 (AU); Nagorcka, James Arthur, Tarrington, Victoria 3301 (AU)
(74) Vertreter: Lau-Loskill, Philipp

(56) Entgegenhaltungen:
- EP-A- 0 997 328
- EP-A- 1 108 569
- DE-A- 3 901 757
- DE-A- 19 622 101
- US-A- 5 879 016

## Beschreibung

Die Erfindung betrifft ein Achs- und Federungssystem zur Federung einer Achse gegenüber einem Fahrzeugrahmen, welches einen Achskörper, einen sich zwischen Achskörper und Rahmen in Längsrichtung erstreckenden und mittels eines Pendelkugellagers am Rahmen befestigten Schublenker und ein den Achskörper und den Rahmen miteinander koppelndes Federungsmittel enthält.

Es ist bekannt, dass bei einem Achskörper an einem Fahrzeug, wie z. B. einem landwirtschaftlichen Schlepper, Pendelbewegungen möglich sind, wie z. B. Drehbewegungen um eine Längsachse, bei denen sich das Rad auf der einen Seite der Achse aufwärts bewegt, während sich das Rad auf der anderen Seite der Achse abwärts bewegt. Der Betrag der Pendelbewegungen wird dabei durch am Fahrzeugrahmen und am Achskörper befindliche Pendelanschläge begrenzt, die gegenseitig in Eingriff treten, wenn das maximal zugelassene Pendelmaß erreicht wird. Wenn eine Trägerachse mit einem Federungssystem versehen ist, variiert die vertikale Position des Achskörpers gegenüber dem Fahrzeugrahmen. Die Vertikalbewegung der Achse verändert das maximal vorhandene Pendelmaß, welches durch das Eingreifen der starren Pendelanschläge begrenzt ist. Aus diesen Gründen werden derartige Pendelanschläge entfernt und andere Mittel eingesetzt, die die Pendelbewegung begrenzen. Um eine gefederte Achse mit einem Pendelanschlag auszustatten, wurden oftmals Ketten eingesetzt. Ein derartiges Beispiel ist in dem US Patent 5,879,016 vorgesehen. Des Weiteren beginnt eine gefederte Achse, wenn Pendelbewegungen eintreten, sich von einer Seite zur anderen Seite zu bewegen, wodurch das als bounce steering" oder "seitliches Auslenken" bekannte Phänomen verursacht wird.

Ein weiteres Beispiel einer gefederten Pendelachse ist in der EP 1 108 569 offenbart, welche als nächstliegender Stand der Technik angesehen werden kann. Über eine mit einem Rahmen und einer Pendelachse verbundene und ein Dämpfungselement aufweisende Hebelanordnung können gefederte Pendelbewegungen der Pendelachse relativ zum Rahmen ausgeführt werden. Nachteilig wirkt sich dabei aus, dass ein vertikaler Bewegungsspielraum zwischen Pendelachse und Rahmen nicht gegeben ist, so dass keine von einer Pendelbewegung gelöste Einfederung der Pendelachse gegenüber dem Rahmen möglich ist.

Die der Erfindung zugrunde liegende Aufgabe wird darin gesehen, ein Achs- und Federungssystem der eingangs genannten Art anzugeben, durch welches die vorgenannten Probleme überwunden werden. Insbesondere soll ein Federungssystem für eine Pendelachse vorgesehen werden, bei der die durch Pendelanschläge begrenzten Pendelwinkel weitgehend unabhängig von der Einfederung der Pendelachse sind. Des Weiteren sollen seitliche Bewegungen der Achse, die das "bounce steering" oder "Auslenken" verursachen, durch das Achs- und Federsystem eliminiert werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist an einem Achs- und Federungssystem der eingangs genannten Art ein Scherengestänge vorgesehen, wobei das Scherengestänge ein erstes und ein zweites sich im Wesentlichen in Längsrichtung erstreckendes Gestänge aufweist, das erste Gestänge schwenkbar an einer oberen Schwenkachse mittels oberer rechter und linker Schwenklager an den Rahmen und an einer mittleren Schwenkachse mittels mittlerer rechter und linker Schwenklager an das zweite Gestänge und das zweite Gestänge schwenkbar an einer unteren Schwenkachse mittels unterer rechter und linker Schwenklager an ein Tragzapfenlager gekoppelt ist, wobei das Scherengestänge sich vertikal zwischen dem Achskörper und dem Rahmen erstreckt und durch das Tragzapfenlager an einen Tragzapfen des Achskörpers derart gekoppelt ist, dass Pendelbewegungen des Achskörpers um eine Längsachse möglich sind und wobei die Schwenklager als Stützlager ausgebildet sind, um seitliche Bewegungen des Achskörpers zu verhindern.

Das Gestänge enthält somit ein oberes und ein unteres Gestänge, wobei die Gestänge in einer gemeinsamen mittleren Schwenkachse, mittels Schwenklager auf beiden Seiten des Gestänges, miteinander verbunden sind. Um seitliche Auslenkungen des durch das Scherengestänge geführten Achskörpers zu unterbinden, sind das linke und rechte erste (obere) Schwenklager, das linke und rechte mittlere Schwenklager sowie das linke und rechte untere Schwenklager als Stützlager derart ausgebildet, dass Kräfte, die seitlich auf den Achskörper einwirken durch das Scherengestänge aufgenommen und "bounce steering" bzw. seitliche Auslenkbewegungen des Achskörpers eliminiert werden.

Durch das Tragzapfenlager, welches eine tragende Verbindung zwischen dem Scherengestänge und dem Achskörper herstellt und durch das sich am Ende des Schublenkers befindliche Pendelkugellager kann sich der Achskörper gegenüber dem Scherengestänge um eine Längsachse verdrehen und somit Pendelbewegungen ausführen. Der Tragzapfen ist dabei vorzugsweise am vorderen Ende des Achskörpers ausgebildet und von dem Tragzapfenlager umgeben. Das Tragzapfenlager ist vorzugsweise als Lagerring ausgebildet, der den mit einer ausgeformten Lagernut ausgebildeten Tragzapfen umgibt, ihn gegen axiale Verschiebung sichert und dabei Drehbewegungen um die Längsachse des Tragzapfens zulässt. Die unteren Schwenklager an der unteren Schwenkachse des Scherengestänges sind mit dem Tragzapfenlager bzw. dem Lagerring verbunden. Durch das Scherengestänge und den Tragzapfen bzw. die Tragzapfenlagerung wird der Achskörper und der Fahrzeugrahmen gelenkig miteinander verbunden. Damit werden zum einen Vertikalbewegungen des Achskörpers durch das Scherengestänge geführt und zum anderen sind Pendelbewegungen um die Längsachse des Tragzapfens möglich.

Durch das Aneinanderkoppeln des ersten und zweiten Gestänges in einer mittleren Schwenkachse wird erzielt, dass sich diese Gestänge wie eine Schere, bzw. wie zwei Schenkel eines veränderlichen Winkels, zueinander bewegen, so dass ein vertikaler Bewegungsspielraum zwischen Achskörper und Fahrzeugrahmen entsteht.

In einer besonders bevorzugten Ausgestaltung der Erfindung sind linke und rechte erste (obere, starre) Pendelanschläge am Scherengestänge und linke und rechte zweite Pendelanschläge am Achskörper ausgebildet. Bei entsprechenden Pendelbewegungen des Achskörpers treffen die sich am Scherengestänge befindlichen linken und rechten oberen starren Pendelanschläge auf die sich am Achskörper befindlichen unteren linken und rechten Pendelanschläge, wodurch die vertikalen Pendelausschläge begrenzt werden.

Vorzugsweise sind die am Scherengestänge befindlichen linken und rechten oberen starren Pendelanschläge am ersten (oberen) Gestänge ausgebildet. Dabei ist es von Vorteil die Pendelanschläge in der Nähe oder jenseits der Gelenkstelle zwischen erstem und zweitem Gestänge vorzusehen. Dadurch, dass die oberen starren Pendelanschläge am Scherengestänge ausgebildet sind, im Gegensatz zu den herkömmlich am Rahmen ausgebildeten starren Pendelanschlägen, bewegen sich diese mit der Achse mit, wenn die Achse vertikale Bewegungen ausführt, so dass auch bei größeren Vertikalbewegungen des Achskörpers gegenüber dem Fahrzeugrahmen weiterhin Pendelbewegungen der Achse ausgeführt werden können.

In einer besonders bevorzugten Ausgestaltung der Erfindung ist im ersten (oberen) Gestänge zwischen seinen (seitlichen) Enden bzw. zwischen seinen seitlichen Abgrenzungen ein Torsionsrohr vorgesehen. Das Torsionsrohr übt eine abfedernde Wirkung auf das System aus, insbesondere wenn die Pendelanschläge links- oder rechtsseitig bzw. beidseitig aufeinander treffen.

In einer weiteren Ausgestaltung der Erfindung ist als Federungsmittel, vorzugsweise ein einzelner sich zwischen dem Rahmen und dem Achskörper erstreckender Hydraulikzylinder vorgesehen. Dieser wird vorzugsweise an oder in der Nähe der ersten (oberen) und der zweiten (unteren) Schwenkachse vorzugsweise außerhalb des Scherengestänges angelenkt. Vorzugsweise weist der Hydraulikzylinder eine Normalstellung auf, in der das Scherengestänge spannkräftig auseinander gehalten wird. Treten am Achskörper vertikale Stöße auf, werden diese durch den Hydraulikzylinder abgefedert und gedämpft.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Vorderansicht eines landwirtschaftlichen Schleppers mit einem erfindungsgemäßen Achs- und Federungsaufbau,
- Fig. 2: eine Seitenansicht des an einen Rahmen des Schleppers aus Figur 1 gekoppelten Achs- und Federungsaufbaus,
- Fig. 3: eine Draufsicht des Federungsaufbaus aus Figur 2 und
- Fig. 4: eine perspektivische Ansicht des Federungsgestänges und der Vorderachse.

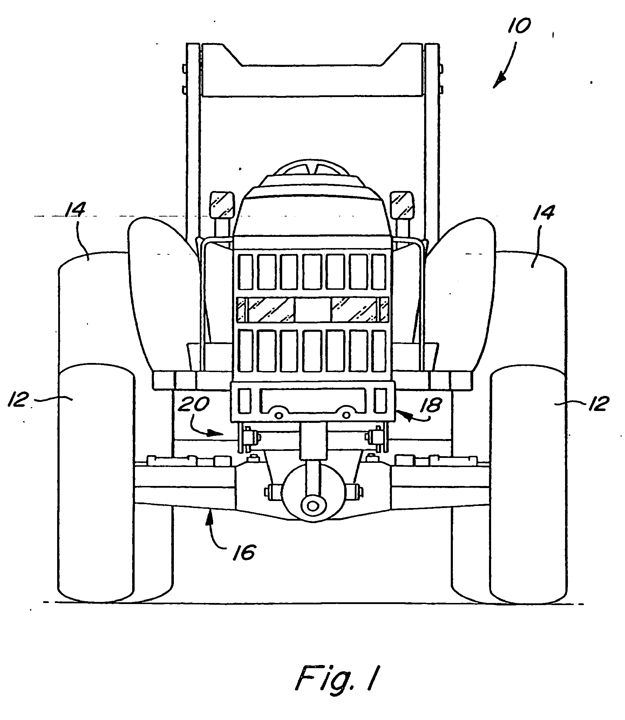

Fig. 1 zeigt einen landwirtschaftliche Schlepper 10 mit einem erfindungsgemäßen Achs- und Federungsaufbau. Der Schlepper 10 enthält ein Paar Vorderräder/-reifen 12 und ein Paar Hinterräder/-reifen 14. Die Vorderräder/-reifen 12 sind auf einer mittels eines Federungssystems 20 an einen Rahmen 18 des Schleppers 10 gekoppelte Trägerachse 16 gelagert.

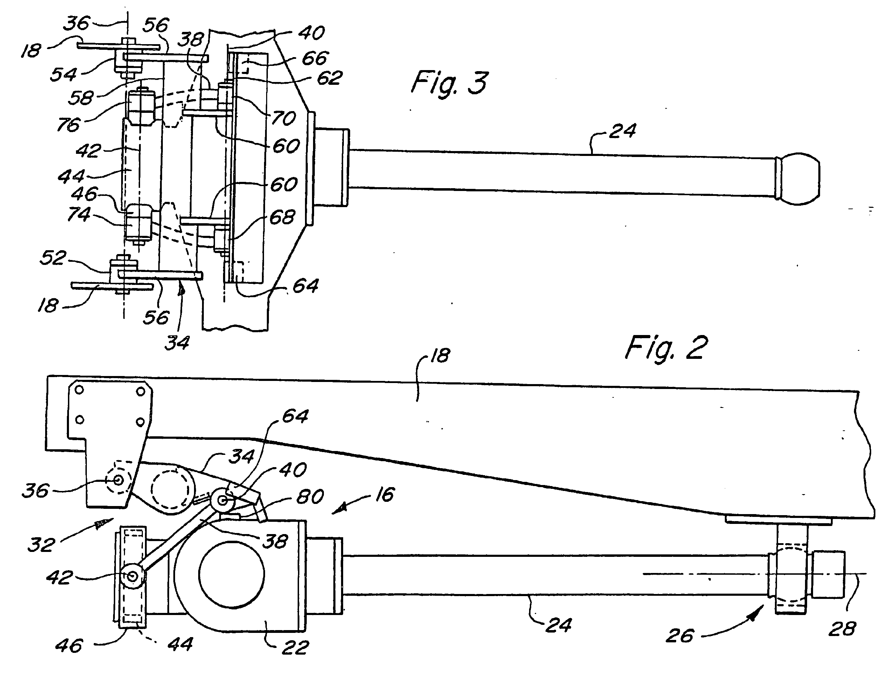

Die Komponenten der Federung 20 sind detailliert in Fig. 2 und 3 dargestellt. Die Trägerachse 16 enthält einen Achskörper 22. Die Federung 20 enthält einen Schublenker 24 der sich vom Achskörper 22 nach hinten erstreckt und durch ein Pendelkugellager 26 an den Rahmen 18 befestigt ist. Das Pendelkugellager ermöglicht dem Achskörper 22, sich sowohl auf und ab zu bewegen als auch um eine Längsachse 28 zu rotieren.

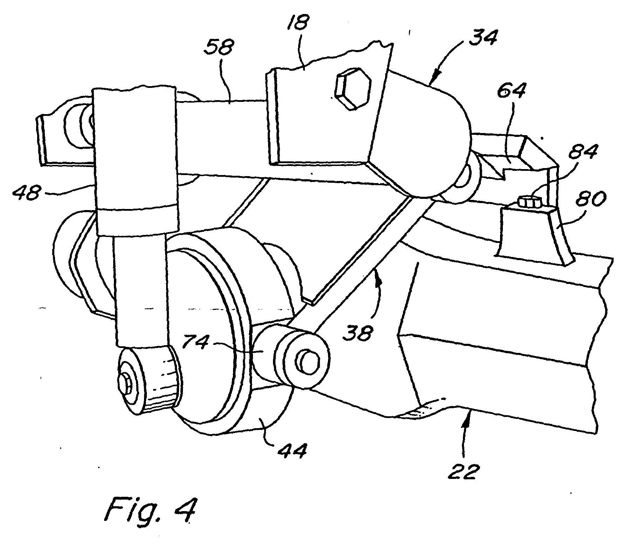

Ein Scherengestänge 32 erstreckt sich vertikal zwischen dem Achskörper 22 und dem Rahmen 18 des Schleppers 10. Das Scherengestänge 32 enthält ein oberes Gestänge 34, welches schwenkbar an den Rahmen 18 gekoppelt ist und sich um eine obere Schwenkachse 36 dreht. Das obere Gestänge 34 ist an einer mittleren Schwenkachse 40 schwenkbar an ein unteres Gestänge 38 gekoppelt. Das untere Gestänge 38 ist schwenkbar an den Achskörper 22 gekoppelt und dreht sich um eine untere Schwenkachse 42. Das untere Gestänge 38 ist durch einen Tragzapfen 44, der ein Tragzapfenlager 46 aufnimmt, mit dem Achskörper 22 verbunden. Der Tragzapfen 44 und das Tragzapfenlager 46 erlauben dem Achskörper 22 sich relativ zum Scherengestänge 32 um die Längsachse 28 zu verdrehen. Die Schwenkverbindungen des Scherengestänges 32 an der oberen Schwenkachse 36, der mittleren Schwenkachse 40 und an der unteren Schwenkachse 42 erlauben dem Achskörper 22, sich vertikal zu bewegen, während der Trägerzapfen 44, das Trägerzapfenlager 46 und das Pendelkugellager 26 dem Achskörper 22 ermöglichen, um die Längsachse 28 zu rotieren oder zu pendeln. Zwischen dem Achskörper 22 und dem Rahmen 18 erstreckt sich ein Hydraulikzylinder 48, wie in den Figuren 1 und 4 zu sehen ist. Der Hydraulikzylinder 48 ist Teil eines hydropneumatischen Federungssystems zur Dämpfung von Stößen bei gleichzeitigem Aufbringen einer konstanten Druckkraft auf die Achse 18.

Wie in Fig. 3 detailliert dargestellt, ist das obere Gestänge 34 mit linken und rechten oberen Schwenklagern 52 und 54 an den Rahmen 18 gekoppelt. Das obere Gestänge enthält Auslegerarme 56, die sich von den oberen Schwenklagern 52, 54 aus nach hinten bis zu einem Torsionsrohr 58 erstrecken. An das Torsionsrohr 58 angeschweißte Auslegerarme 60 erstrecken sich von dort nach hinten und tragen einen Querbolzen 62 und linke und rechte Pendelanschläge 64, 66. Der Querbolzen 62 trägt ein linkes und ein rechtes mittleres Schwenklager 68, 70, welche einen mittleren Schwenkpunkt um die mittlere Schwenkachse 40 bilden. Das untere Gestänge 38 trägt ein linkes und rechtes unteres Schwenklager 74, 76 welche mit dem Trägerzapfen 44 bzw. dem Trägerzapfenlager 46 verbunden sind. Die oberen Schwenklager 52, 54, die mittleren Schwenklager 68, 70 und die unteren Schwenklager 74, 76 sind Stützlager, die seitlichen Belastungen am Achskörper 22 standhalten um seitliche Bewegungen des Achskörpers 22 zu verhindern, wodurch ein alternierendes seitliches "Auslenken" ("bounce steering") der Achse vermieden wird.

Wie Fig. 4 zeigt, ist der Achskörper 22 mit abstehenden linken und rechten Pendelanschlägen 80, 82 ausgebildet, von denen nur einer zu sehen ist, die mit den linken und rechten starren Pendelanschlägen 64, 66 am oberen Gestänge 34 in Eingriff treten. Die Pendelanschläge 80, 82 am Achskörper 22 sind mit Schrauben 84 versehen, die einstellbare Anschläge mit austauschbaren Verschleißflächen darstellen. Dadurch, dass die starren mechanischen Pendelanschläge 64, 66 an dem oberen Gestänge 34 vorgesehen sind, bewegen sich diese Anschläge 64, 66 in vertikale Richtung, wenn der Achskörper 22 sich vertikal bewegt. Der Abstand zwischen den verstellbaren Anschlägen 80, 82 auf dem Achskörper 22 und den starren Anschlägen 64, 66 am oberen Gestänge 34 variiert nicht in dem Maße, wie der Abstand zwischen dem Achskörper 22 und dem Rahmen 18, wenn sich der Achsrahmen 22 vertikal bewegt.

Das erfindungsgemäße Achs- und Federungssystem sieht starre Pendelanschläge 64, 66 vor, die sich mit dem Achskörper 22 mitbewegen, wenn dieser sich in vertikale Richtung bewegt. Dadurch können die starren mechanischen Pendelanschläge 64, 66 die gleiche Wirkung entfalten, wie bei einem nicht gefederten Achskörper 22. Des Weiteren leistet das Scherengestänge 32 einen Widerstand gegen seitliche Schubkräfte und verhindert seitliche Bewegungen der Achse. Dadurch wird seitliches "Auslenken" der Achse eliminiert.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Achs- und Federungssystem zur Federung einer Achse (16) gegenüber einem Fahrzeugrahmen (18) mit einem Achskörper (22), einem sich zwischen Achskörper (22) und Rahmen (18) in Längsrichtung erstreckenden und mittels eines Pendelkugellagers (26) am Rahmen befestigten Schublenker (24), und einem den Achskörper (22) und den Rahmen (18) miteinander koppelnden Federungsmittel (48), **dadurch gekennzeichnet, dass** ein Scherengestänge (32) vorgesehen ist, wobei das Scherengestänge (32) ein erstes und ein zweites sich im Wesentlichen in Längsrichtung erstreckendes Gestänge (34, 38) aufweist, das erste Gestänge (34) schwenkbar an einer oberen Schwenkachse (36) mittels oberer linker und rechter Schwenklager (52, 54) an den Rahmen (18) und an einer mittleren Schwenkachse (40) mittels mittlerer rechter und linker Schwenklager (68, 70) an das zweite Gestänge (38) und das zweite Gestänge (38) schwenkbar an einer unteren Schwenkachse (42) mittels unterer rechter und linker Schwenklager (74, 76) an ein Tragzapfenlager (46) gekoppelt ist, wobei das Scherengestänge sich vertikal zwischen dem Achskörper (22) und dem Rahmen (18) erstreckt und durch das Tragzapfenlager (46) an einen Tragzapfen (44) des Achskörpers (22) derart gekoppelt ist, dass Pendelbewegungen des Achskörpers (22) um eine Längsachse (28) möglich sind und wobei die Schwenklager (52, 54, 68, 70, 74, 76) als Stützlager ausgebildet sind, um seitliche Bewegungen des Achskörpers (22) zu verhindern.

2. Achs- und Federungssystem nach Anspruch 1, **dadurch gekennzeichnet, dass** linke und rechte erste Pendelanschläge (64, 66) am Scherengestänge (32) ausgebildet sind und dass linke und rechte zweite Pendelanschläge (80, 82) am Achskörper (22) ausgebildet sind, wobei die zweiten Pendelanschläge (80, 82) mit dem linken bzw. dem rechten ersten Pendelanschlag (64, 66) in Eingriff treten können.

3. Achs- und Federungssystem nach Anspruch 2, **dadurch gekennzeichnet, dass** die linken und rechten ersten Pendelanschläge (64, 66) des Scherengestänges (32) am ersten Gestänge (34) ausgebildet sind.

4. Achs- und Federungssystem nach einem der Ansprüche 1 bis 3, **dadurch gekennzeichnet, dass** das erste Gestänge (34) ein Torsionsrohr (58) enthält.

5. Achs- und Federungssystem nach einem der Ansprüche 1 bis 4, **dadurch gekennzeichnet, dass** das Federungsmittel (48) einen einzelnen sich zwischen dem Rahmen (18) und dem Achskörper (22) erstreckenden Hydraulikzylinder enthält.

## Claims

1. Axle and suspension system for suspending an axle (16) relative to a vehicle frame (18), having an axle body (22), a thrust arm (24), which extends in the longitudinal direction between axle body (22) and frame (18) and is mounted on the frame by means of a self-aligning bearing (26), and having a suspension means (48), which couples the axle body (22) and the frame (18) together, **characterised in that** a scissors linkage (32) is provided, the scissors linkage (32) having a first and a second link (34, 38) which extend substantially in the longitudinal direction, the first link (34) being coupled pivotably at an upper pivot axis (36) by means of upper left and right pivot bearings (52, 54) to the frame (18) and at a central pivot axis (40) by means of central right and left pivot bearings (68, 70) to the second link (38) and the second link (38) being coupled pivotably at a lower pivot axis (42) by means of lower right and left pivot bearings (74, 76) to a trunnion bearing (46), the scissors linkage extending vertically between the axle body (22) and the frame (18) and being coupled by the trunnion bearing (46) to a trunnion (44) of the axle body (22) in such a manner that oscillation movements of the axle body (22) about a longitudinal axis (28) are possible, and the pivot bearings (52, 54, 68, 70, 74, 76) being configured as support bearings in order to prevent lateral movements of the axle body (22).

2. Axle and suspension system according to claim 1, **characterised in that** left and right first oscillation stop members (64, 66) are configured on the scissors linkage (32) and **in that** left and right second oscillation stop members (80, 82) are configured on the axle body (22), the second oscillation stop members (80, 82) being able to come into engagement with the left or respectively right first oscillation stop member (64, 66).

3. Axle and suspension system according to claim 2, **characterised in that** the left and right first oscillation stop members (64, 66) of the scissors linkage (32) are configured on the first link (34).

4. Axle and suspension system according to one of the claims 1 to 3, **characterised in that** the first link (34) contains a torque tube (58).

5. Axle and suspension system according to one of the claims 1 to 4, **characterised in that** the suspension means (48) contains a single hydraulic cylinder which extends between the frame (18) and the axle body (22).

## Revendications

1. Système de suspension à ressorts pour un essieu (16) par rapport à un châssis du véhicule (18), comportant un corps d'essieu (22), une bielle de poussée (24), qui s'étend dans le sens longitudinal entre le corps d'essieu (22) et le châssis (18) et qui est fixée sur le châssis au moyen d'un palier avec roulement à billes à rotule (26), et un moyen de suspension (48) par lequel le corps d'essieu (22) et le châssis (18) sont couplés l'un à l'autre, **caractérisé en ce qu'**il est prévu un parallélogramme articulé (32), ledit parallélogramme articulé (32) comportant un premier et un deuxième tringlage (34, 38) orientés sensiblement dans le sens longitudinal, le premier tringlage (34) étant monté sur le châssis (18) de manière pivotante sur un axe de pivotement supérieur (36) au moyen de paliers de pivotement supérieurs gauche et droit (52, 54) et sur le deuxième tringlage (38) de manière pivotante sur un axe de pivotement central (40) au moyen de paliers de pivotement centraux droit et gauche (74, 76) et le deuxième tringlage (38) étant couplé à un palier de tourillon (46) de manière pivotante sur un axe de pivotement inférieur (42) au moyen de paliers de pivotement inférieurs droit et gauche (74, 76), le parallélogramme articulé étant orienté verticalement entre le corps d'essieu (22) et le châssis (18) et étant couplé par l'intermédiaire du palier de tourillon (46) à un tourillon d'appui (44) du corps d'essieu (22), de telle sorte que le corps d'essieu (22) peut effectuer des mouvements pendulaires autour d'un axe longitudinal (28) et les paliers de pivotement (52, 54, 68, 70, 74, 76) étant conçus sous forme de paliers de support en vue d'éviter les mouvements latéraux du corps d'essieu (22).

2. Système de suspension à ressorts pour essieu selon la revendication 1, **caractérisé en ce que** des premières butées de mouvement pendulaire gauche et droite (64, 66) sont réalisées sur le parallélogramme articulé (32) et **en ce que** des deuxièmes butées de mouvement pendulaire gauche et droite (80, 82) sont réalisées sur le corps d'essieu (22), les deuxièmes butées de mouvement pendulaire (80, 82) pouvant entrer en prise avec la butée de mouvement pendulaire gauche (64) ou la butée de mouvement pendulaire droite (66).

3. Système de suspension à ressorts pour essieu selon la revendication 2, **caractérisé en ce que** les premières butées de mouvement pendulaire gauche et droite (64, 66) du parallélogramme articulé (32) sont réalisées sur le premier tringlage (34).

4. Système de suspension à ressorts pour essieu selon l'une quelconque des revendications 1 à 3, **caractérisé en ce que** le premier tringlage (34) comporte un tube de torsion (58).

5. Système de suspension à ressorts pour essieu selon l'une quelconque des revendications 1 à 4, **caractérisé en ce que** le moyen de suspension (48) comporte un seul vérin hydraulique qui s'étend entre le châssis (18) et le corps d'essieu (22).
